# EUROPÄISCHE PATENTANMELDUNG

(11) **EP 3 517 232 A1**
(43) Veröffentlichungstag der Anmeldung: **31.07.2019**
(21) Anmeldenummer: 18153597.2
(22) Anmeldetag: 26.01.2018
(51) Int. Cl.: B22F 3/105, B22F 7/06, B22F 7/08, B23Q 15/007, B23Q 15/20, B33Y 10/00, B33Y 40/00, B29C 64/245, B23K 26/10, G05B 19/4099

(54) **VERFAHREN ZUR GENERATIVEN FERTIGUNG WENIGSTENS EINES BAUELEMENTS**

(71) Anmelder: Siemens Aktiengesellschaft, 80333 München (DE)
(72) Erfinder: Heinrichsdorff, Frank, 14513 Teltow (DE); Arndt, Axel, 10961 Berlin (DE); Pyritz, Uwe, 13599 Berlin (DE)

(57) **Zusammenfassung**

Die Erfindung betrifft ein Verfahren zum Herstellen wenigstens eines Bauelements (10), bei welchem das Bauelement (10) mittels wenigstens eines generativen Fertigungsverfahrens auf einem Substrat (16) hergestellt wird, indem auf dem Substrat (16) zumindest ein Material (20) mittels wenigstens eines Energiestrahls (11) erwärmt und dadurch geschmolzen wird, wodurch mehrere Schichten aus dem Material (20) hergestellt und zum Herstellen des Bauelements (10) aufeinander angeordnet und miteinander verbunden werden, mit den Schritten:
- Bereitstellen des Substrats (16) mit wenigstens einer an dem Substrat (16) vorgesehenen ersten Markierung (22);
- mittels des Energiestrahls (11): Versehen des Substrats (16) mit wenigstens einer zweiten Markierung (28);
- Ermitteln wenigstens eines Positionswerts, welcher zumindest eine Lage der Markierungen (22, 28) relativ zueinander charakterisiert; und
- Durchführen des generativen Fertigungsverfahrens in Abhängigkeit von dem ermittelten Positionswert.

## Beschreibung

Die Erfindung betrifft ein Verfahren zum Herstellen wenigstens eines Bauelements gemäß dem Oberbegriff von Patentanspruch 1.

Derartige Verfahren zum Herstellen von Bauelementen sind aus dem allgemeinen Stand der Technik bereits hinlänglich bekannt. Bei einem solchen Verfahren wird das jeweilige Bauelement mittels wenigstens eines generativen Fertigungsverfahrens auf einem Substrat hergestellt, indem auf dem Substrat zumindest ein Material mittels wenigstens eines Energiestrahls erwärmt und dadurch geschmolzen wird. Hierdurch werden mehrere Schichten aus dem Material hergestellt und zum Herstellen des Bauelements aufeinander angeordnet und miteinander verbunden.

Aufgabe der vorliegenden Erfindung ist es, ein Verfahren der eingangs genannten Art derart weiterzuentwickeln, dass das Bauelement besonders präzise hergestellt werden kann.

Diese Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Bei dem erfindungsgemäßen Verfahren zum Herstellen wenigstens eines Bauelements wird das Bauelement mittels wenigstens eines generativen Fertigungsverfahrens, insbesondere mittels eines generativen Schichtbauverfahrens, auf einem Substrat hergestellt. Hierzu wird auf dem Substrat zumindest ein Material mittels wenigstens eines Energiestrahls erwärmt und dadurch geschmolzen, wodurch mehrere Schichten aus dem Material hergestellt und zum Herstellen des Bauelements aufeinander angeordnet und miteinander verbunden werden. Das Bauelement wird somit aus den Schichten hergestellt und dabei Schicht für Schicht aufgebaut, indem die Schichten durch Schmelzen des Materials aufeinander hergestellt und somit aufeinander angeordnet und miteinander verbunden werden.

Um nun das Bauelement besonders präzise herstellen zu können, umfasst das Verfahren erfindungsgemäß einen ersten Schritt, bei welchem das Substrat mit wenigstens einer an dem Substrat, insbesondere auf dem Substrat, vorgesehenen ersten Markierung bereitgestellt wird. Das Verfahren umfasst erfindungsgemäß einen zweiten Schritt, bei welchem das Substrat mittels des Energiestrahls mit wenigstens einer zweiten Markierung versehen wird. Bei einem dritten Schritt des erfindungsgemäßen Verfahrens wird wenigstens ein Positionswert ermittelt, welcher zumindest eine Lage der Markierungen relativ zueinander charakterisiert. Hierzu werden beispielsweise die Markierungen, insbesondere mittels einer Erfassungseinrichtung, erfasst. Beispielsweise werden die Markierungen mittels der Erfassungseinrichtung optisch erfasst. Hierzu umfasst beispielsweise die Erfassungseinrichtung wenigstens ein optisches Erfassungselement, insbesondere einen optischen Sensor, mittels welchem beispielsweise die jeweilige Markierung optisch erfasst werden kann.

Durch das Erfassen der Markierungen werden beispielsweise erste Positionsdaten ermittelt, welche beispielsweise eine erste Position beziehungsweise eine erste Lage der ersten Markierung, insbesondere auf beziehungsweise an dem Substrat, charakterisieren. Ferner werden beispielsweise durch das Erfassen der Markierungen zweite Positionsdaten ermittelt, welche beispielsweise eine zweite Position beziehungsweise eine zweite Lage der zweiten Markierung, insbesondere auf beziehungsweise an dem Substrat, charakterisieren. Dabei umfasst beispielsweise der Positionswert die ersten Positionsdaten und die zweiten Positionsdaten oder der Positionswert wird aus den ersten und zweiten Positionsdaten gewonnen. Beispielsweise werden die zweiten Positionsdaten mit den ersten Positionsdaten verglichen, wodurch beispielsweise eine Differenz beziehungsweise ein Unterschied zwischen der ersten Position und der zweiten Position ermittelt werden kann.

Das erfindungsgemäße Verfahren umfasst ferner einen vierten Schritt, bei welchem das generative Fertigungsverfahren in Abhängigkeit von dem ermittelten Positionswert durchgeführt wird. Somit wird beispielsweise das generative Fertigungsverfahren in Abhängigkeit von den ersten Positionsdaten und in Abhängigkeit von den zweiten Positionsdaten beziehungsweise in Abhängigkeit von dem genannten Unterschied durchgeführt.

Das generative Fertigungsverfahren wird beispielsweise auf Basis von Verfahrensdaten durchgeführt, die beispielsweise in einer Speichereinrichtung einer Anlage zum Durchführen des generativen Fertigungsverfahrens gespeichert sind. In Abhängigkeit von den Verfahrensdaten wird beispielsweise der Energiestrahl auf dem Substrat und/oder relativ zu dem Substrat bewegt, um dadurch die Schichten herzustellen, sodass beispielsweise die Schichten und somit das Bauelement in Abhängigkeit von den Verfahrensdaten hergestellt werden.

Weicht beispielsweise die erste Position von der zweiten Position ab beziehungsweise überschreitet der zuvor beschriebenen Unterschied beispielsweise einen vorgebbaren Schwellenwert, so werden beispielsweise die zunächst in der Speichereinrichtung gespeicherten Verfahrensdaten in Abhängigkeit von dem zuvor beschriebenen Unterschied und/oder in Abhängigkeit von den ersten Positionsdaten und/oder in Abhängigkeit von den zweiten Positionsdaten verändert beziehungsweise angepasst. Mit anderen Worten werden beispielsweise die Verfahrensdaten in Abhängigkeit von dem Erfassen der Markierungen verändert beziehungsweise angepasst. Insbesondere werden die Verfahrensdaten derart angepasst beziehungsweise verändert, dass der zuvor beschriebene Unterschied zwischen den Positionen der Markierungen zumindest verringert oder aufgehoben wird.

Hintergrund der Erfindung ist insbesondere, dass beispielsweise das Substrat zunächst von der Anlage getrennt beziehungsweise gelöst und insbesondere außerhalb der Anlage angeordnet ist und dann zum Herstellen des Bauelements an, insbesondere auf und/oder in, der Anlage positioniert und insbesondere relativ zur Anlage ausgerichtet wird. Dabei beziehen sich beispielsweise die zunächst in der Speichereinrichtung gespeicherten Verfahrensdaten auf eine Soll-Lage des Substrats relativ zu der Anlage. Durch das Anordnen des Substrats an der Anlage kann es jedoch zu einer von der Soll-Lage abweichenden Ist-Lage des Substrats relativ zu der Anlage kommen, insbesondere dann, wenn das Substrat von einer Person manuell an der Anlage angeordnet wird. Weicht nun die Ist-Lage von der Soll-Lage ab, so kann dies eine gewünscht präzise Herstellung des Bauelements beeinträchtigen, da sich die Verfahrensdaten zunächst auf die Soll-Lage, nicht jedoch auf die Ist-Lage beziehen.

Anhand der Markierungen ist es nun auf die zuvor beschriebene Weise möglich, eine etwaige Abweichung der Ist-Lage von der Soll-Lage durch Ermitteln des Positionswerts, das heißt beispielsweise durch Erfassen der Markierungen beziehungsweise durch Ermitteln des beschriebenen Unterschieds, zu ermitteln. In der Folge können die sich zunächst auf die Soll-Lage beziehenden Verfahrensdaten an die Ist-Lage angepasst werden, sodass sich dann die Verfahrensdaten auf die Ist-Lage beziehen. Die Ist-Lage kann insbesondere anhand des Positionswerts beziehungsweise anhand des Erfassens der Markierungen ermittelt werden.

Alternativ oder zusätzlich ist es möglich, in Abhängigkeit von dem ermittelten Positionswert das Substrat derart relativ zu der Anlage, insbesondere manuell oder automatisch, auszurichten, dass der zuvor beschriebene Unterschied zumindest verringert wird oder aufgehoben wird. Hierbei wird das Substrat insbesondere derart relativ zur Anlage ausgerichtet, dass die Ist-Lage der Soll-Lage zumindest angenähert oder angeglichen wird, sodass dann das generative Fertigungsverfahren auf Basis der Verfahrensdaten besonders präzise durchgeführt werden kann.

Mittels des erfindungsgemäßen Verfahrens ist es insbesondere möglich, mehrere, zeitlich aufeinanderfolgende Herstellvorgänge durchzuführen, in deren Rahmen jeweils mittels eines generativen Fertigungsverfahrens auf dem Substrat ein Bauelement hergestellt wird, wobei das Substrat nach jedem Herstellvorgang aus der Anlage genommen und daraufhin vor dem Durchführen des jeweils darauffolgenden Herstellvorgangs wieder an der Anlage anordnen zu können und dabei den jeweils darauffolgenden Herstellvorgang besonders präzise durchführen zu können, da das Substrat vor dem jeweiligen Herstellvorgang besonders präzise relativ zueinander ausgerichtet werden kann beziehungsweise da der jeweilige Herstellvorgang in Abhängigkeit von dem jeweiligen Positionswert durchgeführt werden kann, sodass das Bauelement insgesamt besonders präzise hergestellt werden kann.

Der jeweilige Herstellvorgang wird auch als Job oder Druckjob bezeichnet, da beispielsweise das generative Fertigungsverfahren auch als Drucken beziehungsweise 3D-Drucken bezeichnet wird. Insbesondere handelt es sich beispielsweise bei dem generativen Fertigungsverfahren um selektives Laserschmelzen (SLM), sodass der jeweilige Job beispielsweise auch als SLM-Job bezeichnet wird. Im Rahmen eines mehrteiligen SLM-Druckens werden - wie zuvor beschrieben - mehrere, zeitlich aufeinanderfolgende Druckjobs durchgeführt, um beispielsweise im Rahmen des jeweiligen Druckjobs ein jeweiliges Bauelement auf demselben Substrat herzustellen. Dabei sollte das Substrat für jeden auch als Teiljob bezeichneten Druckjob identisch, insbesondere relativ zur Anlage, positioniert werden, um einen übermäßigen Versatz zwischen den einzelnen, auch als Teilstücken bezeichneten Bauelementen zu vermeiden. Nach ihrer Herstellung bilden die Bauelemente beispielsweise eine zusammenhängende Baueinheit. Die Durchführung derartiger, zeitlich aufeinanderfolgender Druckjobs, welche auch als mehrteilige Druckjobs bezeichnet werden, kann beispielsweise dann erforderlich sein beziehungsweise vorgesehen werden, wenn die Bauelemente aus unterschiedlichen Werkstoffen hergestellt werden. Somit würden beispielsweise ein erstes der Bauelemente aus einem ersten Werkstoff und ein zweites der Bauelemente aus einem von dem ersten Werkstoff unterschiedlichen zweiten Werkstoff hergestellt und insbesondere durch den jeweiligen Druckjob gebildet.

Üblicherweise ist eine identische Positionierung des Substrats relativ zur Anlage nicht oder nur sehr aufwendig nötig, da beispielsweise typischerweise eine spielbehaftete und somit nicht spielfreie Montage des beispielsweise als Substratplatte ausgebildeten Substrats auf einem Maschinenbett der Anlage vorgesehen ist. Somit kann üblicherweise das Substrat nur relativ unpräzise relativ zur Anlage positioniert werden. Ein ähnliches Problem entsteht bei einer sogenannten hybriden Fertigung. Im Rahmen einer solchen hybriden Fertigung wird beispielsweise das Bauelement mittels eines oder mehrerer Druckjobs, insbesondere per Laserstrahlschmelzen, auf ein klassisch vorgefertigtes Bauteil aufgebaut.

Um eine hinreichend präzise Ausrichtung beziehungsweise Positionierung des Substrats relativ zur Anlage, insbesondere bei mehrteiligen Druckjobs, gewährleisten zu können, ist eine Verwendung einer sogenannten Nullspannvorrichtung denkbar. Mittels einer solchen Nullspannvorrichtung kann eine spielfreie Montage des Substrats beziehungsweise der Substratplatte, insbesondere an dem genannten Maschinenbett, gewährleistet werden. Die Handhabung und Montage der Nullspannvorrichtung an sich ist jedoch zeit- und kostenaufwendig und birgt Fehlerpotentiale. Darüber hinaus verringert der Einsatz einer Nullspannvorrichtung in einer Pulverbettbasierten AM-Anlage die maximale Bauhöhe und damit die maximal mögliche Ausdehnung des Bauteils in einer Raumrichtung.

Das erfindungsgemäße Verfahren ermöglicht es nun, die Verwendung einer Nullspannvorrichtung zu vermeiden, da beispielsweise die auch als Datensatz bezeichneten Verfahrensdaten an das Substrat, insbesondere an dessen Lage relativ zur Anlage, auf die zuvor beschriebene Weise angepasst werden kann. Mit anderen Worten kann im Rahmen des erfindungsgemäßen Verfahrens der Datensatz zu dem Substrat beziehungsweise zu dessen Lage ohne den Einsatz zusätzlicher Vorrichtungen wie beispielsweise einer Nullspannvorrichtung ausgerichtet werden. Hierzu wird die erste Markierung als sogenannte erste Justiermarke verwendet, wobei die erste Justiermarke auch als Nullmarke bezeichnet wird. Ferner wird beispielsweise die zweite Markierung als zweite Justiermarke verwendet. Die jeweilige Markierung wird auch als Passermarke oder Passermarkierung bezeichnet.

Um das generative Fertigungsverfahren beziehungsweise dessen Durchführung besonders präzise an das Substrat, insbesondere an dessen Lage oder Ausrichtung relativ zu der Anlage, anpassen zu können, ist es in vorteilhafter Ausgestaltung der Erfindung vorgesehen, dass das Substrat mittels des Energiestrahls mit der ersten Markierung versehen wird. Bei einer besonders vorteilhaften Ausführungsform der Erfindung umfasst das Substrat wenigstens ein Basiselement, welches beispielsweise als die zuvor genannte Substratplatte ausgebildet sein kann. Hierdurch kann das Bauelement besonders präzise hergestellt werden.

Dabei hat es sich als besonders vorteilhaft gezeigt, wenn an dem Basiselement die erste Markierung vorgesehen ist, sodass insbesondere das Basiselement beispielsweise mittels des Energiestrahls mit der ersten Markierung versehen wird. Hierdurch kann beispielsweise eine unerwünschte, durch die Markierungen bewirkte Beeinflussung des Bauelements beziehungsweise der zuvor genannten und auch als Baugruppe bezeichneten Baueinheit vermieden werden.

Um das Bauelement besonders präzise herzustellen, ist es in weiterer Ausgestaltung der Erfindung vorgesehen, dass das Basiselement mit der zweiten Markierung, insbesondere mittels des Energiestrahls, versehen wird.

Eine besonders vorteilhafte Herstellung des Bauelements lässt sich insbesondere dadurch realisieren, dass auf dem Basiselement wenigstens ein vor dem Herstellen des Bauelements hergestelltes Werkstück vorgesehen ist, wobei das Bauelement durch das generative Fertigungsverfahren hergestellt und an das Werkstück gefügt, das heißt mit dem Werkstück verbunden, wird, sodass nach dem Herstellen des Bauelements das Werkstück und das Bauelement eine Baueinheit bilden. Hierdurch lässt sich auf besonders einfache und präzise Weise beispielsweise eine hybride Fertigung realisieren, insbesondere dann, wenn beispielsweise das Werkstück durch ein von einem generativen Fertigungsverfahren unterschiedliches Herstellungsverfahren hergestellt ist beziehungsweise wurde. Insbesondere kann dadurch die Baueinheit, insbesondere dessen Geometrie, besonders bedarfsgerecht hergestellt werden, sodass sich eine besonders vorteilhafte Funktion der Baueinheit realisieren lässt.

Eine weitere Ausführungsform zeichnet sich dadurch aus, dass das Werkstück dem Substrat zugeordnet ist und mit der zweiten Markierung versehen wird. Hierdurch kann das Bauelement besonders präzise hergestellt werden.

Um das Bauelement und somit die Baueinheit besonders präzise herstellen zu können, ist es in weiterer Ausgestaltung der Erfindung vorgesehen, dass - bevor das Bauelement hergestellt wird - das Werkstück auf dem Basiselement hergestellt wird.

Dabei hat es sich als besonders vorteilhaft gezeigt, wenn das Werkstück auf dem Basiselement mittels wenigstens eines generativen Fertigungsverfahrens hergestellt wird, indem auf dem Basiselement zumindest ein Werkstoff mittels wenigstens eines Energiestrahls erwärmt und dadurch geschmolzen wird, wodurch mehrere weitere Schichten aus dem Werkstoff hergestellt und zum Herstellen des Werkstücks aufeinander angeordnet und miteinander verbunden werden. Die vorigen und folgenden Ausführungen zu dem generativen Fertigungsverfahren, mittels welchem das Bauelement hergestellt wird, können ohne weiteres auch auf das generative Fertigungsverfahren übertragen werden, mittels welchem das Werkstück hergestellt wird. Auf diese Weise können sowohl das Bauelement als auch das Werkstück zeit- und kostengünstig sowie besonders präzise hergestellt werden.

Eine weitere Ausführungsform zeichnet sich dadurch aus, dass das Bauelement und das Werkstück aus voneinander unterschiedlichen Werkstoffen gebildet sind. Mit anderen Worten ist beispielsweise der Werkstoff, aus welchem das Werkstück hergestellt wird, ein erster Werkstoff, wobei beispielsweise das Material, aus welchem das Bauelement hergestellt wird, ein von dem ersten Werkstoff unterschiedlicher zweiter Werkstoff ist. Hierdurch kann die Baueinheit besonders präzise und besonders bedarfsgerecht und insbesondere mit besonders vorteilhaften Eigenschaften hergestellt werden.

In weiterer Ausgestaltung der Erfindung wird vor dem Herstellen des Bauelements eine Oberfläche des Substrats, auf welcher die erste Markierung und/oder die zweite Markierung vorgesehen ist, geschliffen, insbesondere plan geschliffen. Hierdurch wird beispielsweise die erste Markierung und/oder die zweite Markierung vor dem Herstellen des Bauelements entfernt, und die Oberfläche wird beispielsweise besonders vorteilhaft vorbehandelt beziehungsweise vorbearbeitet, um daran anschließend das Bauelement, insbesondere zumindest teilweise auf der Oberfläche, besonders präzise herstellen zu können. Insbesondere können hierdurch durch die jeweilige Markierung bewirkte Beeinträchtigungen des Bauelements beziehungsweise der Herstellung des Bauelements vermieden werden, sodass das Bauelement besonders vorteilhaft hergestellt werden kann.

In weiterer Ausgestaltung der Erfindung ist es vorgesehen, dass beim Versehen des Substrats mit der zweiten Markierung ein mittels des Energiestrahls bewirktes Schmelzen des Materials unterbleibt. Hierdurch kann die zweite Markierung präzise hergestellt werden, um in der Folge das Bauelement besonders präzise herstellen zu können.

Eine weitere Ausführungsform zeichnet sich dadurch aus, dass als der Energiestrahl ein Laserstrahl verwendet wird. Hierdurch kann das Bauelement besonders präzise und somit besonders vorteilhaft hergestellt werden.

Um das Bauelement beziehungsweise die Baueinheit insgesamt besonders zeit- und kostengünstig und präzise herstellen zu können, ist es in weiterer Ausgestaltung der Erfindung vorgesehen, dass als das Material und/oder der Werkstoff ein Pulver, insbesondere ein metallisches Pulver, verwendet wird.

Vorzugsweise werden wenigstens oder genau zwei erste Markierungen und somit wenigstens oder genau zwei Nullmarken verwendet, welche insbesondere ohne Verwendung des Materials, das heißt ohne das Material zu schmelzen, mittels des beispielsweise als Laserstrahl beziehungsweise Prozesslaser ausgebildeten Energiestrahls auf oder an die jeweiligen ungenutzten Stellen des Substrats, insbesondere einer Substratplatte des Substrats, hergestellt, insbesondere gebrannt, werden. Bei einer hybriden Fertigung, bei welcher beispielsweise das Werkstück klassisch, das heißt nicht durch ein generatives Fertigungsverfahren, sondern beispielsweise durch ein von dem generativen Fertigungsverfahren unterschiedlichen Herstellungsverfahren, hergestellt ist beziehungsweise wurde, wird beispielsweise als die Nullmarke beziehungsweise werden als die Nullmarken Ausnehmungen, insbesondere Öffnungen, verwendet, wobei die jeweilige Ausnehmung beispielsweise als eine Bohrung, insbesondere mit einem geringen Durchmesser, ausgebildet ist. Die Ausnehmung beziehungsweise Bohrung, die als Nullmarke verwendet wird, wird beispielsweise im Rahmen der Herstellung des Werkstücks und somit beispielsweise im Rahmen des Herstellungsverfahrens hergestellt.

Im Zuge der Anordnung des Substrats an der Anlage werden beispielsweise das Substrat und somit insbesondere die etwaig vorgesehene Substratplatte in die Anlage eingebaut. Vor der eigentlichen Durchführung des generativen Fertigungsverfahrens und nach dem Einbau des Substrats in die Anlage wird die zweite Markierung hergestellt. Mit anderen Worten wird die zweite Markierung geschrieben. Insbesondere werden vorzugsweise wenigstens oder genau zwei zweite Markierungen hergestellt beziehungsweise geschrieben, sodass beispielsweise wenigstens zwei oder genau zwei zweite Justiermarken verwendet werden. Der zuvor beschriebene Unterschied zwischen der Position der ersten Markierung und der Position der zweiten Markierung wird auch als Positionsabweichung bezeichnet. Somit wird wenigstens eine Positionsabweichung der zweiten Justiermarken von den Nullmarken ermittelt, insbesondere gemessen.

Insbesondere ist es denkbar, die jeweilige zweite Markierung an eine jeweilige Position der jeweiligen ersten Markierung zu schreiben, insbesondere dann, wenn gewährleistet ist, dass die erste Markierung die zweite Markierung auch bei einer etwaigen Überlappung zwischen der ersten Markierung und der zweiten Markierung voneinander getrennt, das heißt beispielsweise voneinander unterschieden, werden können.

In Abhängigkeit von der Positionsabweichung, das heißt beispielsweise in Abhängigkeit von dem Positionswert, kann beispielsweise eine Rotation und/oder Translation berechnet werden, die beispielsweise erforderlich ist, um - wie zuvor beschrieben - die Verfahrensdaten zu verändern und insbesondere an die Ist-Lage anzupassen. Insbesondere können in Abhängigkeit von dem Positionswert eine Lage und eine Orientierung eines Baudatensatzes korrigiert und dadurch an die Ist-Lage angepasst werden, wobei beispielsweise das Bauelement auf Basis des Baudatensatzes hergestellt wird. Somit ist beispielsweise der Baudatensatz der zuvor genannte Datensatz.

Es wurde gefunden, dass das erfindungsgemäße Verfahren eine Ausrichtung beziehungsweise Anpassung des generativen Fertigungsverfahrens an das Substrat und somit insbesondere an das bereits bestehende beziehungsweise hergestellte Werkstück mit einer Genauigkeit von kleiner gleich 0,1 Millimeter ermöglicht, ohne hierfür zusätzliche Vorrichtungen wie beispielsweise Nullspannvorrichtungen oder Kamerasysteme, welche beispielsweise an einer Baukammer der Anlage montiert sind, verwenden zu müssen. Somit kann das Bauelement zeit- und kostengünstig sowie gleichzeitig besonders präzise hergestellt werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Darstellung eines erfindungsgemäßen Verfahrens gemäß einer ersten Ausführungsform;
- FIG 2: eine schematische Draufsicht einer Baueinheit, welche mittels des Verfahrens gemäß der ersten Ausführungsform hergestellt ist;
- FIG 3: eine schematische Draufsicht einer weiteren Baueinheit, welche mittels des Verfahrens gemäß einer zweiten Ausführungsform hergestellt ist; und
- FIG 4: eine schematische Darstellung des Verfahrens gemäß einer zweiten Ausführungsform.

In den FIG sind gleiche oder funktionsgleiche Elemente mit gleichen Bezugszeichen versehen.

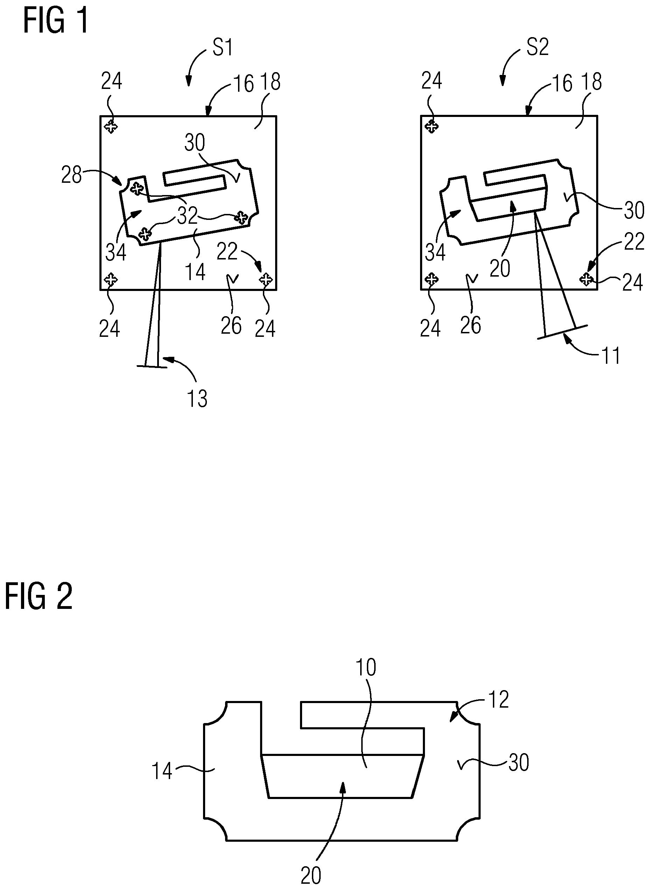

Im Folgenden wird anhand von FIG 1 und 2 eine erste Ausführungsform eines Verfahrens zum Herstellen wenigstens eines in FIG 2 in einer schematischen Draufsicht gezeigten Bauelements 10 veranschaulicht. FIG 2 zeigt in einer schematischen Draufsicht eine im Ganzen mit 12 bezeichnete Baueinheit, welche das Bauelement 10 als ein Oberteil und ein Werkstück 14 als ein Unterteil umfasst. Wie im Folgenden noch genauer erläutert wird, wird das Bauelement 10 im Rahmen seiner Herstellung auf dem Unterteil (Werkstück 14) hergestellt beziehungsweise aufgebaut und dabei mit dem Werkstück 14 gefügt, das heißt verbunden.

Wie besonders gut aus FIG 1 erkennbar ist, wird zumindest das Bauelement 10 mittels wenigstens eines generativen Fertigungsverfahrens auf einem Substrat 16 hergestellt. Das Substrat 16 umfasst eine Substratplatte 18, welche auch einfach als Platte bezeichnet wird. Wie im Folgenden noch genauer erläutert wird, umfasst das Substrat 16 bei der ersten Ausführungsform auch das Werkstück 14, sodass das Werkstück 14 bei der ersten Ausführungsform Bestandteil des Substrats 16 ist. Die Substratplatte 18 und das Werkstück 14 können bei der ersten Ausführungsform als zu dem Substrat 16 gehörig angesehen werden, da das Bauelement 10 auf dem Werkstück 14 und dabei auf der Substratplatte 18 hergestellt wird, sodass das Bauelement 10 zumindest vorübergehend über das Werkstück 14 an der Substratplatte 18 abgestützt beziehungsweise angeordnet wird beziehungsweise ist.

Das Bauelement 10 wird mittels des generativen Fertigungsverfahrens auf dem Substrat 16, insbesondere auf der Substratplatte 18, hergestellt, indem auf dem Substrat 16 zumindest ein Material 20, aus welchem das Bauelement 10 hergestellt wird, mittels wenigstens eines Energiestrahls erwärmt und dadurch geschmolzen wird.

Als der Energiestrahl wird ein Laserstrahl verwendet, sodass als das generative Fertigungsverfahren beispielsweise selektives Laserschmelzen (SLM) durchgeführt wird. Das Material 20, aus welchem das Bauelement 10 hergestellt wird, ist vorzugsweise ein Pulver. Alternativ oder zusätzlich ist das Material vorzugsweise ein metallisches Material, sodass beispielsweise das Bauelement 10 aus einem Metallpulver hergestellt wird. Des Weiteren wird das generative Fertigungsverfahren beispielsweise mittels einer Anlage durchgeführt, welche bei der ersten Ausführungsform beispielsweise als SLM-Anlage ausgebildet ist. Die Anlage umfasst dabei beispielsweise ein auch als Maschinenbett bezeichnetes Bett, an welchem das Substrat 16, insbesondere über die Substratplatte 18, angeordnet und insbesondere befestigt wird. Mit anderen Worten ist beispielsweise das Substrat 16 zunächst von der Anlage getrennt beziehungsweise gelöst und wird zum Herstellen des Bauelements 10 an, insbesondere in, der Anlage angeordnet. Hierbei wird beispielsweise das Substrat 16, insbesondere über die Substratplatte 18, an dem Maschinenbett befestigt, bevor das generative Fertigungsverfahren durchgeführt wird. Durch dieses Befestigen des Substrats 16 an der Anlage, insbesondere an dem Maschinenbett, nimmt beispielsweise das Substrat 16 vor dem Durchführen des generativen Fertigungsverfahrens eine Ist-Lage oder eine Ist-Ausrichtung relativ zu der Anlage ein.

Beispielsweise mittels einer Einrichtung wird das Material aus einem Reservoir auf das Maschinenbett und somit auf das Substrat 16 gefördert, woraufhin zumindest ein Teil des auf dem Substrat 16 angeordneten Materials mittels des Energiestrahls erwärmt und dadurch geschmolzen wird. Hierdurch wird beispielsweise eine erste Schicht aus dem Material hergestellt, wobei das Bauelement 10 aus der ersten Schicht hergestellt wird. Daraufhin wird beispielsweise das Material aus einem Reservoir erneut mittels der Einrichtung auf das Substrat 16 und insbesondere auf die erste Schicht gefördert, woraufhin zumindest ein Teil des sich auf dem Substrat 16 und insbesondere auf der ersten Schicht befindenden Materials mittels des Energiestrahls erwärmt und dadurch geschmolzen wird. Dadurch wird beispielsweise, auf der ersten Schicht, eine zweite Schicht aus dem Material hergestellt und mit der ersten Schicht verbunden, sodass das Bauelement 10 aus den Schichten hergestellt wird. Dieser Vorgang wird beispielsweise mehrmals wiederholt, sodass mittels des Energiestrahls das Material erwärmt und dadurch geschmolzen wird, wodurch mehrere Schichten aus dem Material hergestellt und zum Herstellen des Bauelements 10 aufeinander angeordnet und miteinander verbunden werden. Auf diese Weise wird das Bauelement 10 Schicht für Schicht aufgebaut und somit hergestellt. Vor dem Herstellen der zweiten Schicht und etwaiger weiterer Schichten werden das Maschinenbett und somit das Substrat 16 beispielsweise ein Stück abgesenkt, um das Material und das Bauelement 10 beispielsweise in einer Kammer aufnehmen zu können.

Um nun das Bauelement 10 und somit die Baueinheit 12 insgesamt besonders präzise sowie auf besonders einfache und kostengünstige Weise und dabei insbesondere ohne Verwendung von Ausrichtvorrichtungen zum Ausrichten des Substrats 16 relativ zur Anlage und ohne Verwendung von Kamerasystemen herstellen zu können, wird das Substrat 16 mit wenigstens einer an dem Substrat 16 vorgesehenen ersten Markierung 22 bereitgestellt. Aus FIG 1 ist erkennbar, dass die erste Markierung 22 beispielsweise wenigstens oder genau zwei erste Justiermarken 24 aufweisen kann, wobei die ersten Justiermarken 24 auch als Nullmarken bezeichnet werden. Die ersten Justiermarken 24 werden als Nullmarken bezeichnet, da sie an dem Substrat 16, insbesondere auf dem Substrat 16, vor dem Herstellen des Bauelements 10 vorgesehen sind beziehungsweise werden. Bei der ersten Ausführungsform ist die erste Markierung 22 an, insbesondere auf, der Substratplatte 18 vorgesehen. Insbesondere sind die Justiermarken 24 an, insbesondere auf, einer Oberfläche 26 der Substratplatte 18 des Substrats 16 vorgesehen.

Die Markierung 22 wird beispielsweise vor dem Herstellen des Bauelements 10 und nachdem das Substrat 16 an, insbesondere in, der Anlage angeordnet wurde, mittels des Energiestrahls an dem Substrat 16, insbesondere an der Substratplatte 18, hergestellt. Mit anderen Worten wird vorzugsweise das Substrat 16, insbesondere die Substratplatte 18, mittels des Energiestrahls mit der ersten Markierung 22 versehen, nachdem das Substrat 16 an, insbesondere in, der Anlage angeordnet wurde und bevor das Bauelement 10 hergestellt wird.

Aus FIG 1 ist erkennbar, dass die Substratplatte 18 ein Basiselement des Substrats 16 ist, wobei an beziehungsweise auf dem Basiselement die erste Markierung 22 vorgesehen ist. Dabei ist auf dem Basiselement (Substratplatte 18) das vor dem Herstellen des Bauelements 10 bereitgestellte Werkstück 14 vorgesehen. Mit anderen Worten ist das Werkstück 14 vor dem Herstellen des Bauelements 10 auf dem Basiselement angeordnet beziehungsweise vorgesehen, sodass - insbesondere, da bei der ersten Ausführungsform das Werkstücks zu dem Substrat 16 gehört - das Werkstück 14 zusammen mit der Substratplatte 18 an, insbesondere in, der Anlage angeordnet wird, bevor das Bauelement 10 hergestellt wird. Das Bauelement 10 wird somit durch das zuvor genannte generative Fertigungsverfahren hergestellt und an das Werkstück 14 gefügt, sodass nach dem Herstellen des Bauelements 10 das Werkstück 14 und das Bauelement 10 die Baueinheit 12 bilden.

Bei dem Verfahren wird ferner das Substrat 16 mit wenigstens einer zweiten Markierung 28 versehen. Insbesondere wird eine Oberfläche 30 des Substrats 16 mit der zweiten Markierung 28 versehen. Die Markierung 28 umfasst beispielsweise wenigstens oder genau drei zweite Justiermarken 32, wobei bei der ersten Ausführungsform das Werkstück 14 mittels des Energiestrahls mit der zweiten Markierung 28 versehen wird. Somit ist die Oberfläche 30, an beziehungsweise auf welcher die zweiten Justiermarken 32 mittels des Energiestrahls hergestellt werden, durch das Werkstück 14 gebildet, sodass mittels des Energiestrahls die zweite Markierung 28 und somit die zweiten Justiermarken 32 an beziehungsweise auf der Oberfläche 30 des Werkstücks 14 hergestellt werden, insbesondere bevor das Bauelement 10 hergestellt wird und nachdem das Substrat 16 und somit das Werkstück 14 an beziehungsweise in der Anlage angeordnet wurde.

Insgesamt ist erkennbar, dass bei der ersten Ausführungsform die Substratplatte 18 (Basiselement) mit der ersten Markierung 22 versehen ist beziehungsweise versehen wird, wobei bei der ersten Ausführungsform das Werkstück 14 mit der zweiten Markierung 28 versehen wird.

Bei dem Verfahren wird darüber hinaus wenigstens ein Positionswert ermittelt, welcher zumindest eine Lage der ersten Markierung 22 relativ zur zweiten Markierung 28 charakterisiert. Die Markierungen 22 und 28 werden auch als Passermarken bezeichnet, wobei die Passermarken zugeordnet werden, um den Positionswert zu ermitteln. Durch das Ermitteln des Positionswerts kann beispielsweise eine etwaige Abweichung der zuvor genannten Ist-Lage von einer Soll-Lage ermittelt werden, wobei diese Abweichung auch als Unterschied zwischen der Ist-Lage und der Soll-Lage bezeichnet wird. Daraufhin wird das generative Fertigungsverfahren zum Herstellen des Bauelements 10 in Abhängigkeit von dem ermittelten Positionswert durchgeführt. Insbesondere ist es beispielsweise möglich, dass das generative Fertigungsverfahren in Abhängigkeit beziehungsweise auf Basis von Verfahrensdaten durchgeführt wird, welche beispielsweise in einer Speichereinrichtung der Anlage gespeichert sind. Die Verfahrensdaten sind beispielsweise Bestandteil eines Baudatensatzes und werden genutzt, um während des generativen Fertigungsverfahrens den Energiestrahl zu betreiben, insbesondere relativ zu dem Substrat 16 zu bewegen. Beispielsweise sind die Verfahrensdaten zunächst an die Soll-Lage angepasst. Nach dem Ermitteln des Positionswerts können die zunächst an die Soll-Lage angepassten Verfahrensdaten in Abhängigkeit von dem Positionswert verändert und dabei insbesondere an die Ist-Lage angepasst werden, da beispielsweise der Positionswert dadurch, dass er die Lage der Markierungen 22 und 28 relativ zueinander charakterisiert, den zuvor beschriebenen Unterschied zwischen der Ist-Lage und der gewünschten Soll-Lage beschreibt. Durch das Anpassen beziehungsweise Verändern der Verfahrensdaten kann der Unterschied zwischen der Soll-Lage und der Ist-Lage kompensiert werden, sodass das Bauelement 10 und somit die Baueinheit 12 mittels des generativen Fertigungsverfahrens besonders präzise hergestellt werden kann.

Grundsätzlich ist es denkbar, dass das Werkstück 14 durch ein klassisches Herstellungsverfahren, das heißt durch ein von dem generativen Fertigungsverfahren unterschiedliches Herstellungsverfahren, hergestellt ist. Im Rahmen der ersten Ausführungsform des Verfahrens ist jedoch vorgesehen, dass das Werkstück 14 auf der Substratplatte 18 mittels wenigstens eines generativen Fertigungsverfahrens, insbesondere mittels des zuvor beschriebenen generativen Fertigungsverfahrens, hergestellt wird, indem auf der Substratplatte 18, insbesondere vor dem Herstellen des Bauelements 10, ein Werkstoff mittels wenigstens eines Energiestrahls, insbesondere mittels des Energiestrahls, erwärmt und dadurch geschmolzen wird, wodurch mehrere weitere Schichten aus dem Werkstoff hergestellt und zum Herstellen des Werkstücks 14 aufeinander angeordnet und miteinander verbunden werden. Dabei können die vorigen und folgenden Ausführungen zum generativen Fertigungsverfahren, mittels welchem das Bauelement 10 hergestellt wird, ohne Weiteres auch auf das generative Fertigungsverfahren übertragen werden, mittels welchem das Werkstück 14 hergestellt wird und umgekehrt. Somit wird beispielsweise zunächst das Werkstück 14 auf der Substratplatte 18 aufgebaut, bevor das Bauelement 10 hergestellt wird. Beispielsweise wird das generative Fertigungsverfahren, mittels welchem das Werkstück 14 hergestellt wird, mittels der Anlage durchgeführt. Hierzu wird - bevor das Bauelement 10 hergestellt wird - die Substratplatte an, insbesondere in, der Anlage angeordnet, woraufhin das Werkstück 14 auf der Substratplatte 18 hergestellt wird. Daraufhin werden beispielsweise die Substratplatte 18 und das auf der Substratplatte 18 angeordnete Werkstück 14 aus der Anlage beziehungsweise von der Anlage entfernt und daraufhin beispielsweise wieder an der Anlage angeordnet oder aber das Werkstück 14 und das Bauelement 10 werden mittels unterschiedlicher Anlagen hergestellt. Auf diese Weise ist es beispielsweise möglich, das Werkstück 14 und das Bauelement 10 aus voneinander unterschiedlichen Werkstoffen herzustellen. Der Werkstoff, aus welchem das Werkstück 14 hergestellt ist beziehungsweise wird, ist in FIG 1 mit 34 bezeichnet und wird beispielsweise auch als erster Werkstoff bezeichnet. Das Material 20, aus welchem das Bauelement 10 hergestellt wird, wird beispielsweise als zweiter Werkstoff bezeichnet, wobei der zweite Werkstoff ein von dem ersten Werkstoff unterschiedlicher Werkstoff sein kann.

Aus FIG 1 ist erkennbar, dass beispielsweise bei einem ersten Schritt S1 des Verfahrens zunächst das Unterteil (Werkstück 14) auf die beschriebene Weise auf der Substratplatte 18 hergestellt wird. Dies bedeutet, dass das Unterteil auf der Substratplatte 18 aufgebaut wird. Ferner wird das Unterteil nach dessen Herstellung mit der zweiten Markierung 28 mittels des Energiestrahls versehen. Außerdem wird beispielsweise beidem ersten Schritt S1 der Positionswert ermittelt, in dem die Passermarken zugeordnet werden.

Bei einem zweiten Schritt S2 des Verfahrens wird das Oberteil (Bauelement 10) auf die beschriebene Weise hergestellt, wobei bei dem zweiten Schritt S2 das generative Fertigungsverfahren zum Herstellen des Bauelements 10 in Abhängigkeit von dem Positionswert durchgeführt wird. Mit anderen Worten wird bei dem zweiten Schritt S2 das Oberteil, insbesondere auf dem Unterteil, aufgebaut. Da das generative Fertigungsverfahren zum Herstellen des Bauelements 10 in Abhängigkeit von dem Positionswert durchgeführt wird, wird das Oberteil dem Unterteil zugeordnet. Mit anderen Worten wird beispielsweise das Oberteil virtuell relativ zu dem Unterteil ausgerichtet, da die Verfahrensdaten an den Positionswert und somit an das Unterteil angepasst werden.

Anhand des Positionswerts kann beispielsweise eine räumliche Abweichung der Ist-Lage von der Soll-Lage ermittelt werden. In der Folge kann in Abhängigkeit von der räumlichen Abweichung wenigstens eine Translation und/oder wenigstens eine Rotation ermittelt, insbesondere berechnet, werden, wobei beispielsweise die zunächst gespeicherten Verfahrensdaten dieser Rotation und/oder Translation unterzogen werden, um die Verfahrensdaten an die Ist-Lage anzupassen und somit die räumliche Abweichung zu kompensieren. Unter dem Merkmal, dass die Verfahrensdaten beispielsweise der Rotation beziehungsweise Translation unterzogen werden, ist insbesondere zu verstehen, dass beispielsweise wenigstens eine mathematische Operation, insbesondere mittels einer elektronischen Recheneinrichtung, durchgeführt wird, um die zunächst gespeicherten Verfahrensdaten mit der Translation beziehungsweise Rotation zu verrechnen und in der Folge die räumliche Abweichung zu kompensieren. Somit kann das Bauelement 10 und somit die Baueinheit 12 insgesamt präziser hergestellt werden.

Um vorzugsweise durch die Markierung 22 und/oder 28 bewirkte Beeinflussungen zu vermeiden, ist es vorzugsweise vorgesehen, dass die Markierung 22 und/oder die Markierung 28 an einer Stelle beziehungsweise in einem Bereich des Substrats 16 hergestellt wird, wobei die Stelle beziehungsweise der Bereich frei von dem Bauelement 10 ist. Mit anderen Worten wird das Bauelement 10 vorzugsweise neben dem Bereich beziehungsweise neben der Stelle hergestellt, um Beeinflussungen durch die Markierungen 22 und 28 zu vermeiden.

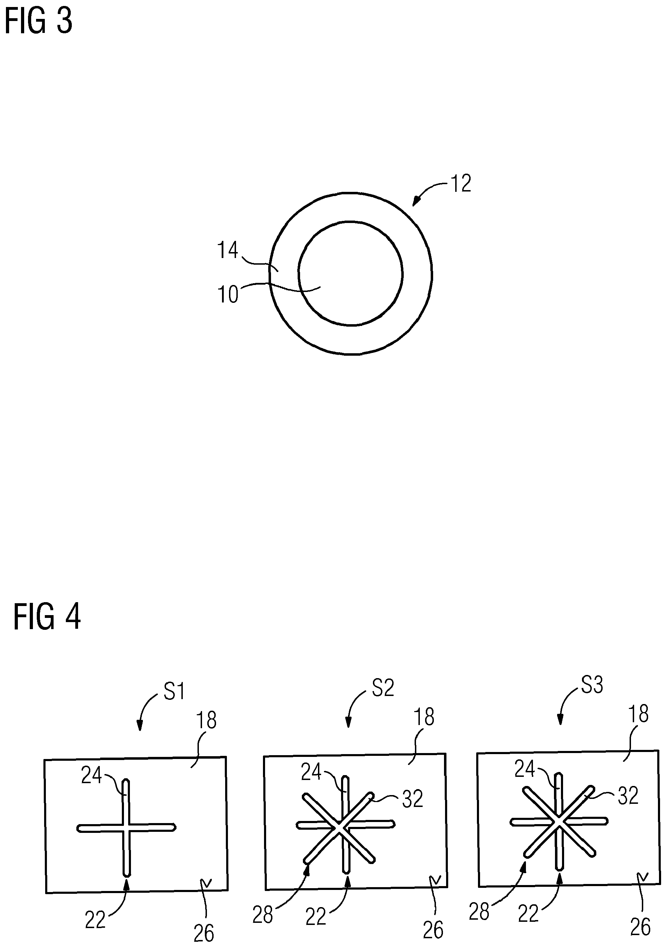

FIG 3 und 4 veranschaulichten eine zweite Ausführungsform des Verfahrens. Dabei zeigt FIG 3 in einer schematischen Draufsicht eine zweite Ausführungsform der Baueinheit 12, welche das Bauelement 10 und das Werkstück 14 aufweist. Die zweite Ausführungsform unterscheidet sich beispielsweise insbesondere dadurch von der ersten Ausführungsform, dass sowohl die erste Markierung 22 als auch die zweite Markierung 28 an, insbesondere auf, der Substratplatte 18 vorgesehen, insbesondere hergestellt, wird.

Bei einem ersten Schritt S1 des Verfahrens gemäß der zweiten Ausführungsform wird beispielsweise die erste Markierung 22 an der Substratplatte 18, insbesondere auf der Oberfläche 26 der Substratplatte 18, hergestellt. Dabei umfasst bei der zweiten Ausführungsform die Markierung 22 wenigstens oder genau eine erste Justiermarke 24. Bei der ersten Ausführungsform und der zweiten Ausführungsform ist die jeweilige erste Justiermarke 24 ein Kreuz beziehungsweise kreuzförmig. Das Herstellen der jeweiligen Markierung 22 beziehungsweise 28 wird auch als Schreiben der jeweiligen Markierung 22 beziehungsweise 28 bezeichnet, sodass beispielsweise bei der zweiten Ausführungsform die Markierung 22, insbesondere die Justiermarke 24, auf die auch als Bauplatte bezeichnete Substratplatte 18, insbesondere auf deren Oberfläche 26, geschrieben wird. Bei der zweiten Ausführungsform wird die Markierung 22 an, insbesondere auf, der Substratplatte 18 mittels des Energiestrahls hergestellt, sodass bei der zweiten Ausführungsform die Substratplatte 18, insbesondere die Oberfläche 26 der Substratplatte 18, mit der Markierung 22 mittels des Energiestrahls versehen wird. Dabei wird die Substratplatte 18, insbesondere deren Oberfläche 26, mit der Markierung 22 versehen, bevor das Bauelement 10 hergestellt wird. Insbesondere wird die Substratplatte 18, insbesondere die Oberfläche 26, mit der Markierung 22 versehen, bevor das Werkstück 14 hergestellt wird.

Nachdem die Substratplatte 18 mit der Markierung 22 versehen wurde, wird das Unterteil auf der Substratplatte 18 hergestellt beziehungsweise aufgebaut. Nachdem das Unterteil hergestellt wurde und bevor das Bauelement 10 hergestellt wird, wird beispielsweise die Substratplatte 18 und mit dieser das Unterteil aus der Anlage entnommen beziehungsweise von der Anlage gelöst und von dieser entfernt.

Nach dem Herstellen des Unterteils und insbesondere nachdem die Substratplatte 18 und mit diesem das Unterteil aus der Anlage entnommen wurden und bevor beispielsweise das Oberteil bei dem Verfahren gemäß der zweiten Ausführungsform hergestellt wird, wird beispielsweise die Oberfläche 30 geschliffen, insbesondere plan geschliffen, vorzugsweise ohne jedoch die Markierung 28 von der Oberfläche 30 zu entfernen.

Bei einem zweiten Schritt S2 des Verfahrens werden beispielsweise die Substratplatte 18 und mit dieser das Unterteil wieder an, insbesondere in, der Anlage oder aber an, insbesondere in, einer weiteren anderen Anlage angeordnet, um mittels der Anlage beziehungsweise mittels der weiteren Anlage das generative Fertigungsverfahren zum Herstellen des Bauelements 10 durchzuführen. Dadurch, dass die Substratplatte 18 und mit dieser das auf der Substratplatte 18 angeordnete Unterteil an beziehungsweise in der Anlage angeordnet werden, nehmen die Substratplatte 18 und mit dieser das Unterteil - wie zuvor beschrieben - eine Ist-Lage relativ zur Anlage ein. Nach dem Anordnen der Substratplatte 18 und des Unterteils an beziehungsweise in der Anlage wird die zweite Markierung 28 auf die Substratplatte 18, insbesondere auf deren Oberfläche 26, geschrieben. Dies bedeutet, dass beispielsweise die Substratplatte 18, insbesondere die Oberfläche 26, mittels des Energiestrahls mit der Markierung 28 versehen wird, bevor das Bauelement 10 hergestellt wird.

Dabei umfasst die Markierung 28 wenigstens oder genau eine zweite Justiermarke 32, welche beispielsweise wie bei der ersten Ausführungsform als Kreuz oder aber als ein Stern ausgebildet ist. Insbesondere ist beispielsweise die als Kreuz ausgebildete zweite Justiermarke 32 gegenüber der als Kreuz ausgebildeten ersten Justiermarke 24 verdreht, insbesondere um wenigstens oder genau 45 Grad.

Entspricht die Ist-Lage der Substratplatte 18 und somit des Unterteils relativ zur Anlage der Soll-Lage, so liegen beispielsweise jeweilige Mittelpunkte der Justiermarken 24 und 32 genau aufeinander. Weicht jedoch die Ist-Lage von der Soll-Lage ab, sind auch die Mittelpunkte der Justiermarken 24 und 32 voneinander beabstandet, was zunächst noch der Fall ist. Mit anderen Worten existiert ein Versatz der Mittelpunkte und somit der Justiermarken 24 und 32. Bei dem zweiten Schritt S2 der zweiten Ausführungsform werden der Positionswert und somit der genannte Versatz ermittelt, woraufhin nachjustiert werden kann. Unter diesem Nachjustieren ist zu verstehen, dass - wie zuvor beschrieben - die zunächst gespeicherten Verfahrensdaten an die Ist-Lage angepasst werden, um den Versatz zu kompensieren. Hierzu werden die Verfahrensdaten beispielsweise der wenigstens einen Translation und/oder der wenigstens einen Rotation unterzogen.

Das Anpassen beziehungsweise Verändern der Verfahrensdaten wird beispielsweise auch als Korrektur der Verfahrensdaten bezeichnet, da die zunächst gespeicherten Verfahrensdaten in Abhängigkeit vom Positionswert bearbeitet beziehungsweise verändert und dadurch an die Ist-Lage angepasst und somit korrigiert werden.

Bei einem sich vorzugsweise an den zweiten Schritt S2 anschließenden dritten Schritt S3 des Verfahrens gemäß der zweiten Ausführungsform wird die Korrektur der Verfahrensdaten beispielsweise überprüft, insbesondere bevor das Bauelement 10 hergestellt wird. Die Überprüfung erfolgt beispielsweise derart, dass die Substratplatte 18, insbesondere ihre Oberfläche 26, mittels des Energiestrahls mit der Markierung 28 versehen wird. Da die Verfahrensdaten zuvor an die Ist-Lage angepasst, das heißt korrigiert, wurden, liegen nun die Mittelpunkte der Markierungen 22 und 28 aufeinander. In der Folge kann das Oberteil auf die beschriebene Weise auf Basis der angepassten Verfahrensdaten präzise hergestellt werden. Ferner unterscheidet sich die zweite Ausführungsform beispielsweise dadurch von der ersten Ausführungsform, dass sowohl die erste Markierung 22 als auch die zweite Markierung 28 an, insbesondere auf, der Substratplatte 18, insbesondere an beziehungsweise auf der Oberfläche 26 der Substratplatte 18, vorgesehen ist beziehungsweise wird.

Insgesamt ist erkennbar, dass das Bauelement 10 besonders präzise hergestellt werden kann, ohne das Substrat 16 mittels separater, zusätzlicher Ausrichtvorrichtungen relativ zur Anlage physisch ausrichten zu müssen. Ferner kann beispielsweise auf den Einsatz von kostenintensiven Kamerasystemen verzichtet werden, sodass das Bauelement 10 und die Baueinheit 12 insgesamt sowohl besonders präzise als auch zeit- und kostengünstig hergestellt werden können.

### Bezugszeichenliste

- 10: Bauelement
- 12: Baueinheit
- 14: Werkstück
- 16: Substrat
- 18: Substratplatte
- 20: Material
- 22: erste Markierung
- 24: erste Justiermarke
- 26: Oberfläche
- 28: zweite Markierung
- 30: Oberfläche
- 32: zweite Justiermarke
- 34: Werkstoff
- S1: erster Schritt
- S2: zweiter Schritt
- S3: dritter Schritt

## Patentansprüche

1. Verfahren zum Herstellen wenigstens eines Bauelements (10), bei welchem das Bauelement (10) mittels wenigstens eines generativen Fertigungsverfahrens auf einem Substrat (16) hergestellt wird, indem auf dem Substrat (16) zumindest ein Material (20) mittels wenigstens eines Energiestrahls (11) erwärmt und dadurch geschmolzen wird, wodurch mehrere Schichten aus dem Material (20) hergestellt und zum Herstellen des Bauelements (10) aufeinander angeordnet und miteinander verbunden werden,
**gekennzeichnet durch** die Schritte:
- Bereitstellen des Substrats (16) mit wenigstens einer an dem Substrat (16) vorgesehenen ersten Markierung (22);
- mittels des Energiestrahls (11): Versehen des Substrats (16) mit wenigstens einer zweiten Markierung (28);
- Ermitteln wenigstens eines Positionswerts, welcher zumindest eine Lage der Markierungen (22, 28) relativ zueinander charakterisiert; und
- Durchführen des generativen Fertigungsverfahrens in Abhängigkeit von dem ermittelten Positionswert.

2. Verfahren nach Anspruch 1,
**dadurch gekennzeichnet, dass**
das Substrat (16) mittels des Energiestrahls (11) mit der ersten Markierung (22) versehen wird.

3. Verfahren nach Anspruch 1 oder 2,
**dadurch gekennzeichnet, dass**
das Substrat (16) wenigstens ein Basiselement (18) umfasst.

4. Verfahren nach Anspruch 3,
**dadurch gekennzeichnet, dass**
an dem Basiselement (18) die erste Markierung (22) vorgesehen ist.

5. Verfahren nach Anspruch 3 oder 4,
**dadurch gekennzeichnet, dass** das Basiselement (18) mit der zweiten Markierung (28) versehen wird.

6. Verfahren nach einem der Ansprüche 3 bis 5,
**dadurch gekennzeichnet, dass**
auf dem Basiselement (18) wenigstens ein vor dem Herstellen des Bauelements (10) hergestelltes Werkstück (14) vorgesehen ist, wobei das Bauelement (10) durch das generative Fertigungsverfahren hergestellt und an das Werkstück (14) gefügt wird, sodass nach dem Herstellen des Bauelements (10) das Werkstück (14) und das Bauelement (10) eine Baueinheit (12) bilden.

7. Verfahren nach Anspruch 6,
**dadurch gekennzeichnet, dass**
das Werkstück (14) dem Substrat (16) zugeordnet ist und mit der zweiten Markierung (28) versehen wird.

8. Verfahren nach Anspruch 6 oder 7,
**dadurch gekennzeichnet, dass**,
bevor das Bauelement (10) hergestellt wird, das Werkstück (14) auf dem Basiselement (18) hergestellt wird.

9. Verfahren nach Anspruch 8,
**dadurch gekennzeichnet, dass**
das Werkstück (14) auf dem Basiselement (18) mittels wenigstens eines generativen Fertigungsverfahrens hergestellt wird, indem auf dem Basiselement (18) zumindest ein Werkstoff (34) mittels wenigstens eines Energiestrahls (13) erwärmt und dadurch geschmolzen wird, wodurch mehrere weitere Schichten aus dem Werkstoff (34) hergestellt und zum Herstellen des Werkstücks (14) aufeinander angeordnet und miteinander verbunden werden.

10. Verfahren nach einem der Ansprüche 6 bis 9,
**dadurch gekennzeichnet, dass**
das Bauelement (10) und das Werkstück (14) aus voneinander unterschiedlichen Werkstoffen (20, 34) gebildet sind.

11. Verfahren nach einem der Ansprüche 6 bis 10,
**dadurch gekennzeichnet, dass**
vor dem Herstellen des Bauelements (10) eine Oberfläche (26, 30) des Substrats (16), auf welcher die erste Markierung (22) und/oder die zweite Markierung (28) vorgesehen ist, geschliffen, insbesondere plangeschliffen, wird.

12. Verfahren nach einem der vorhergehenden Ansprüche,
**dadurch gekennzeichnet, dass**
beim Versehen des Substrats (16) mit der zweiten Markierung (28) ein mittels des Energiestrahls (11) bewirktes Schmelzen des Materials (20) unterbleibt.

13. Verfahren nach einem der vorhergehenden Ansprüche,
**dadurch gekennzeichnet, dass**
als der Energiestrahl (20) ein Laserstrahl verwendet wird.

14. Verfahren nach einem der vorhergehenden Ansprüche,
**dadurch gekennzeichnet, dass**
als das Material (20) und/oder der Werkstoff (34) ein Pulver verwendet wird.
